Europäisches Patentamt

European Patent Office

Office européen des brevets

(11) Veröffentlichungsnummer : **0 197 270**
**B1**

# (12) EUROPÄISCHE PATENTSCHRIFT

(45) Veröffentlichungstag der Patentschrift :
**11.01.89**

(21) Anmeldenummer : **86102239.0**

(22) Anmeldetag : **20.02.86**

(51) Int. Cl.⁴ : **D 05 B 69/22, H 02 K 7/112**

(54) **Elektromotorischer Regel- und Steuerantrieb, insbesondere für Industrie-Nähmaschinen.**

(30) Priorität : **08.03.85 DE 3508227**

(43) Veröffentlichungstag der Anmeldung :
**15.10.86 Patentblatt 86/42**

(45) Bekanntmachung des Hinweises auf die Patenterteilung : **11.01.89 Patentblatt 89/02**

(84) Benannte Vertragsstaaten :
**AT BE CH DE FR GB IT LI NL SE**

(56) Entgegenhaltungen :
CH--A-- 448 697
DE--A-- 1 018 138
DE--A-- 3 223 379

(73) Patentinhaber : **Frankl & Kirchner GmbH. & Co. KG
Fabrik für Elektromotoren und elektrische Apparate
Scheffelstrasse 73
D-6830 Schwetzingen (DE)**

(72) Erfinder : **Lengsfeld, Karl
Paul-Bönner-Strasse 15
D-6831 Plankstadt (DE)**
Erfinder : **Link, Erich
Spraulache 14
D-6831 Brühl (DE)**
Erfinder : **Martin, Adolf
Königsberger Strasse 11
D-7512 Rheinstetten 3 (DE)**
Erfinder : **Wittler, Hilmar
Haid + Neustrasse 114
D-7500 Karlsruhe (DE)**

(74) Vertreter : **Rau, Manfred, Dr. Dipl.-Ing. et al
Rau & Schneck, Patentanwälte Königstrasse 2
D-8500 Nürnberg 1 (DE)**

**Beschreibung**

Die Erfindung betrifft einen elektromotorischen Regel- und Steuerantrieb nach dem Oberbegriff des Anspruches 1.

Ein derartiger aus der DE-OS 32 23 379 bekannter Antrieb weist ein Kupplungsspulengehäuse mit einer Kupplungsspule und einem Bremsspulengehäuse mit einer Bremsspule auf, die beide im Bremslagerschild ausgebildet sind. Das Kupplungsspulengehäuse befindet sich — gleichermaßen wie bei der Erfindung — radial außerhalb der Kupplungs-Brems-Scheibe. Ein Magnetpfad wird also ausgehend vom Kupplungsspulengehäuse durch den Radialspalt, den Ringsteg des Ankerrings, den Axialspalt, die Schwungscheibe, die Umfangsfläche und den Gehäusesteg des Kupplungsspulengehäuses gebildet und geschlossen. Bei der bekannten Ausführung liegt das Bremsspulengehäuse radial etwa in Höhe des Bremsbelages der Kupplungs-Brems-Scheibe.

Als Bremsfläche ist axial vor der Bremsspule eine gesonderte Ringscheibe aus nichtmagnetischem Material angebracht. Der Magnetpfad wird vom Bremsspulengehäuse um diese scheibenförmige Bremsfläche, einen Axialspalt zum Ankerring, im Ankerring hinter dem Bremsbelag, den Ringsteg, den Radialspalt, einen Teil des Kupplungsspulengehäuses zum Bremsspulengehäuse zurückgeschlossen. Bei dieser Ausgestaltung ist eine verhältnismäßig starke gegenseitige Beeinflussung der Magnetflüsse der Kupplungsspule einerseits und der Bremsspule andererseits möglich, so daß die Kupplungs-Brems-Scheibe zum Kleben am Bremslagerschild neigt. Außerdem ist der konstruktive Aufwand für die gesonderte Bremsfläche verhältnismäßig groß.

Der Erfindung liegt daher die Aufgabe zugrunde, den gattungsgemäßen Antrieb so auszugestalten, daß bei konstruktiv besonders einfachem Aufbau ein optimaler Magnetfluß erreicht wird, so daß ein Kleben der Kupplungs-Brems-Scheibe ausgeschlossen ist.

Diese Aufgabe wird erfindungsgemäß durch die Merkmale des Kennzeichnungsteiles des Anspruches 1 erreicht.

Durch die spezielle Anordnung des Bremsspulengehäuses in Verbindung mit einem radial nach innen erstreckten Ankerring wird ein sehr kurzer direktgeschlossener Brems-Magnetpfad erreicht. Durch die Hinterschneidung bzw. die Ausnehmung bzw. Ausnehmungen wird erreicht, daß in den Radialspalten ein lediglich radialer Magnetfluß auftritt, der keinerlei Axialkräfte ausübt. Soweit ein Teilpfad vom Bremsspulengehäuse ebenfalls über das Kupplungsspulengehäuse und den Ringsteg des Ankerrings und durch den Ankerring zurück und von dort über den Axialspalt zum Bremsspulengehäuse fließt, kann durch entgegengesetzt gerichteten Magnetfluß erreicht werden, daß bei einem Wechsel der Erregung von einer Erregung der Bremsspule zu einer Erregung der Kupplungsspule bzw. umgekehrt der Abbau des bisherigen Magnetfeldes und der Aufbau eines neuen Magnetfeldes beschleunigt wird.

Durch die besondere Ausgestaltung nach Ansprüchen 3 und 4 wird sichergestellt, daß bei einer axial schwimmenden Lagerung der Schwungscheibe in keinem Fall an den Radialspalten Axialkräfte in Richtung auf den Bremslagerschild auftreten. Durch die Anordnung des Bremsspulengehäuses radial verhältnismäßig weit innen wird auch ermöglicht, daß im Bereich zwischen dem Bremsspulengehäuse und dem Kupplungsspulengehäuse Kühleinrichtungen vorgesehen werden.

Weitere Vorteile und Merkmale der Erfindung ergeben sich aus der nachfolgenden Beschreibung eines Ausführungsbeispiels anhand der Zeichnung. Es zeigt

Fig. 1 einen Antrieb gemäß der Erfindung, bestehend aus Motor und Brems-Kupplungs-Einheit, im axialen Längsschnitt,

Fig. 2 die Kupplungs-Brems-Einheit nach Fig. 1 in vergrößertem Maßstab,

Fig. 3 einen Teilausschnitt aus der Brems-Kupplungs-Einheit, und

Fig. 4 einen weiteren Teilausschnitt aus der Brems-Kupplungs-Einheit.

Der in der Zeichnung dargestellte Antrieb besteht aus einem Motor 1 und einer Brems-Kupplungs-Einheit 2. Der Motor 1 weist ein im wesentlichen zylindrisches Statorgehäuse 3 auf, in dem in üblicher Weise ein aus Stator-Wicklungen 4 und einem Stator-Blechpaket 5 gebildeter Stator konzentrisch angeordnet ist. Ebenfalls konzentrisch zur Mittel-Längsachse 6 ist ein Rotor 7 angeordnet, der auf einer Motorwelle 8 angebracht ist. Letztere ist in Lagerschilden 9, 10 gelagert. Der der Brems-Kupplungs-Einheit 2 abgewandte Lagerschild 10 ist einstückig als Gußteil mit dem Statorgehäuse 3 ausgebildet. In seiner Lagerbohrung 11 ist die Motorwelle 8 mittels eines Wälzlagers 12, bei dem es sich um ein Radial-Axial-Kugellager handelt, gelagert, wobei der Innenring 13 des Wälzlagers 12 gegen einen Bund 14 der Motorwelle 8 abgestützt ist. Auf der axial anderen Seite ist der Außenring 15 des Wälzlagers 12 über eine vorgespannte Schrauben-Druckfeder 16 gegen einen einstückig mit dem Lagerschild 10 ausgebildeten Anschlagring 17 abgestützt, so daß einerseits das Wälzlager 12 gegen ein axiales Wandern auf der Motorwelle 8 gesichert ist, andererseits aber axiale Nachstellbewegungen der Motorwelle 8 im Rahmen des von der Feder 16 vorgegebenen Spiels möglich sind.

Der Lagerschild 9 ist einstückig mit einem annähernd zylindrischen Gehäuse 18 ausgebildet und über Zentrieranschläge 19 mit dem Statorgehäuse 3 konzentrisch zur Achse 6 mittels Schrauben 20 verbunden. In der Lagerbohrung 21 dieses Lagerschildes 9 ist die Motorwelle 8 ebenfalls über ein als Radial-Axial-Kugellager ausgebildetes Wälzlager 22 abgestützt. Auch hier liegt der Innenring 23 des Wälzlagers 22 gegen einen Bund 24 der Motorwelle 8 an, während der Außenring 25 des Wälzlagers 22 auf der anderen, also auf der der Einheit 2 zugewandten Seite über eine vorgespannte Schrauben-Druck Feder 26 gegen einen in der Lagerbohrung 21 festgelegten Sicherungsring 27 abgestützt ist, der also die gleiche Widerlagerfunktion hat, wie der Anschlagring 17 im Lagerschild 10. Die Funktion der Feder 26 besteht darin, den Außenring 25 des Wälzlagers 22 in axialer Richtung zu belasten, um so eine Geräuschentwicklung zu unterbinden. Wenn ein Außenring eines Wälzlagers keine Anlage hat, neigt nämlich ein solches Wälzlager zum Schwingen und damit zur Geräuschbildung. Die Kraft der Feder 26 muß deutlich geringer sein als die der Feder 16, um deren Funktion nicht aufzuheben.

Auf dem Wellenzapfen 28 der Motorwelle 8, auf dem das Wälzlager 22 angeordnet ist, ist auch eine schwungscheibe 29 mittels einer Feder-Nut-Verbindung 30 drehfest festgelegt. Die Schwungscheibe 29 liegt mit der freien Stirnseite ihrer Nabe 31 gegen den Innenring 23 des Wälzlagers 22 an und ist mittels einer auf einen Gewindezapfen 32 des Wellenzapfens 28 aufgeschraubten Mutter 33 axial fest gegen den Innenring 23 gespannt, wodurch sie gleichzeitig axial gegenüber der Motorwelle 8 festgelegt ist. Die aus dem Rotor 7, der Motorwelle 8 samt Wälzlagern 12, 22 und der Schwungscheibe 29 gebildete Einheit ist also in Richtung der Mittel-Längsachse 6 verschiebbar, wobei jeweils die in Verschieberichtung liegende Feder 16 bzw. 26 eine Gegenkraft ausübt.

Das Gehäuse 18 ist auf der dem Motor 1 abgewandten Seite mittels eines Bremslagerschildes 34 abgeschlossen, der mittels Zentrierbünden 35 gegenüber dem Gehäuse 18 zentriert und damit koaxial zur Achse 6 angeordnet ist. Der Bremslager schild 34 ist mittels Schrauben 36 an einem entsprechenden Flansch 37 des Gehäuses 18 befestigt.

Eine koaxial zur Mittel-Längsachse 6 angeordnete Abtriebswelle 38 ist einerseits in einer Lagerbohrung 39 des Bremslagerschilders 34 und andererseits in einer Lagerbohrung 40 in der Schwungscheibe 29 gegenüber letzterer frei drehbar gelagert. Auch die Abtriebswelle 38 ist über jeweils als Radial-Axial-Kugellager ausgebildete Wälzlager 41, 42 in den Lagerbohrungen 39, 40 gelagert. Zwischen den Wälzlagern 41, 42 ist eine Kupplungs-Brems-Scheibe 43 an der Abtriebswelle 38 drehfest angebracht. Die Kupplungs-Brems-Scheibe 43 weist einen äußeren Ankerring 44 aus magnetischem Material auf. An diesem Ankerring 44 ist eine Federscheibe 45 im Bereich ihres äußeren Randes mittels Schrauben 46 befestigt. Im Bereich ihres inneren Randes ist die Federscheibe 45 mittels Schrauben 47 an einem radial von der Abtriebswelle 38 vorstehenden Ringbund 48 befestigt. Diese Art der Befestigung mittels einer dünnen Federscheibe 45 ermöglicht Bewegungen des Ankerrings 44 in Richtung der Achse 6 und koaxial zu dieser.

Auf der der Schwungscheibe 29 zugewandten Seite des Ankerrings 44 ist ein ringförmiger, als Kupplungsbelag 49 dienender Reibbelag durch Kleben befestigt. Diesem ist eine entsprechende ringflächenförmige Kupplungsfläche 50 an der zugewandten Stirnseite der Schwungscheibe 29 zugeordnet. Der Ankerring 44 weist an seinem äußeren Umfang einen axial zur Schwungscheibe 29 vorstehenden Ringsteg 51 auf, der sich mit einem geringen Axialspalt a von nur einigen Zehntel Millimetern bis zur Schwungscheibe 29 hin erstreckt. Der ringförmige Kupplungsbelag 49 liegt mit seinem äußeren Umfang etwa gegen den Innenumfang des Ringsteges 51 an.

Der Bremslagerschild 34 weist ein Kupplungsspulengehäuse 52 auf, das mit einem geringen Radialspalt b von ebenfalls nur einigen Zehntel Millimetern den Ankerring 44 radial umgibt und mit einem radial äußeren ringförmigen Gehäusesteg 53 unter Freilassung eines ebenfalls nur einige Zehntel Millimeter breiten Radialspaltes c einen der Kupplungsfläche 50 benachbarten radialen Umfangsabschnitt 54 der Schwungscheibe 29 umgibt. In dem Kupplungsspulengehäuse 52 des ortsfesten Bremslagerschildes 34 ist eine ringförmige elektromagnetische Kupplungsspule 55 angeordnet, bei deren Erregung ein Magnetpfad 56 vom Kupplungsspulengehäuse 52 durch den Gehäusesteg 53, den Radialspalt c, den Umfangsabschnitt 54 der Schwungscheibe 29, die Schwungscheibe 29, den Axialspalt a, den Ringsteg 51 des Ankerrings 44, den Radialspalt b zurück zum Kupplungsspulengehäuse 52 geschlossen wird. Hierdurch wird die Kupplungs-Brems-Scheibe 43 mit ihrem Kupplungsbelag 49 gegen die Kupplungsfläche 50 der Schwungscheibe 29 gedrückt, wodurch wiederum die Abtriebswelle 38 mit der Motorwelle 8 gekuppelt wird.

Auf der der Schwungscheibe 29 abgewandten Seite ist der Ankerring 44 mit einem als Bremsbelag 57 dienenden Reibbelag versehen, der ebenfalls durch Kleben od. dgl. am Ankerring 44 befestigt ist. Ihm ist im Bremslagerschild 34 eine ringflächenförmige Bremsfläche 58 zugeordnet. Während der Kupplungsbelag 49 auf der Seite des Ankerrings 44 angebracht ist, auf die die Federscheibe 45 befestigt ist, ist der ringscheibenförmige Bremsbelag 57 in einer diesem angepaßten ringförmigen Ausnehmung 59 des Ankerrings 44 angeordnet. Der aus magnetischem Material bestehende Ankerring erstreckt sich von der Ausnehmung 59 radial nach innen bis in die Nähe des Ringbundes 48, wodurch eine ringflächenförmige Magnetübertragungsfläche 60 am Ankerring 44 geschaffen wird, die unter Freilassung eines nur wenige Zehntel Millimeter breiten axialen Spaltes d der radial innerhalb der Bremsfläche 58 liegenden und mit dieser fluchtenden Bremsspulengehäusefläche 61 gegenüberliegt. Im Bremslagerschild 34 ist ein Bremsspulengehäuse 62 ausgebildet, das stirnseitig durch die Bremsspulengehäusefläche 61 abgeschlossen wird. In diesem Bremsspulengehäuse 62 ist eine ringförmige Bremsspule 63 derart angeordnet, daß einerseits radial innerhalb der Bremsspule 63 und radial außerhalb der Bremsspule 63 aber noch innerhalb des Bremsbelages 57 jeweils Magnetfluß übertragen werden kann. Bei Erregung der Bremsspule 63 bildet sich also ein Brems-Magnetpfad 64 aus, von dem ein Teilpfad 64a radial außerhalb der Bremsspule 63 durch das Bremsspulengehäuse 62, den Axialspalt d zwischen der Bremsspulengehäusefläche 61 und der Magnetübertragungsfläche 60 — jeweils zwischen dem Bremsbelag 57 und der Bremsspule 63 — den Ankerring, und zwar radial nach innen, und den Axialspalt d radial innerhalb der Bremsspule 63 zurück in das Bremsspulengehäuse 62 verläuft. Ein anderer Teilpfad 64b des Brems-Magnetpfades 64 verläuft radial nach außen bis in das Kupplungsspulengehäuse 52, durch den Radialspalt b und radial durch den Ankerring 44 nach innen, wo sich die beiden Teilpfade 64a und 64b wieder treffen.

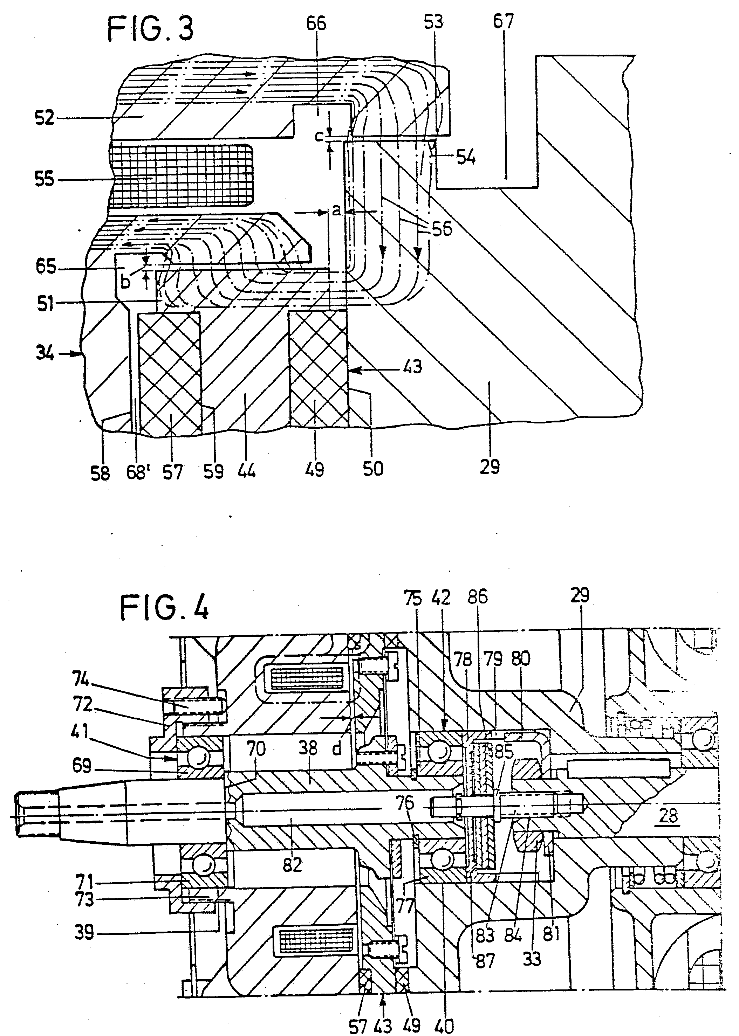

Wie sich aus Fig. 3 ergibt, ist das Kupplungsspulengehäuse 52 im Bereich des Ringsteges 51 auf der dem Bremsbelag 57 zugewandten Bereich mit einer Axial-Radial-Hinterschneidung 65 versehen, die sich derart weit erstreckt, daß der Ringsteg 51 sich etwa einen Millimeter in Richtung zum Bremslagerschild 34 in diese Hinterschneidung 65 hineinerstreckt. Die radiale und axiale Erstreckung dieser Hinterschneidung von dem jeweils nächstbenachbarten Bereich des Ringsteges 51 ist jeweils größer als 0,5 mm, bevorzugt sogar mehr als 1 mm, so daß vom Kupplungsspulengehäuse 52 durch den Radialspalt b nur radial gerichtete Magnetpfade verlaufen können. Ein « Kleben » des Ringsteges 51 des Ankerrings 44 an dem Bremslagerschild 34 bei Erregen der Kupplungsspule 55 ist also ausgeschlossen.

Durch den Axialspalt a verläuft der Kupplungs-Magnetpfad 56 ausschließlich in axialer Richtung, so daß hier die entsprechenden Kupplungskräfte erzeugt werden. Im Bereich des Radialspaltes c zwischen dem Umfangsabschnitt 54 der Schwungscheibe 29 und dem Gehäusesteg 53 des Kupplungsspulengehäuses 52 verläuft der Kupplungs-Magnetpfad 56 wiederum ausschließlich radial, so daß auf die axial gegen die Federn 16 bzw. 26 verschiebbare Einheit aus Rotor 7, Motorwelle 8 und Schwungscheibe 29 nur vernachlässigbare axiale, verschiebend wirkende Kräfte ausgeübt werden. Dies wird durch zusätzliche Ausnehmungen erreicht. Eine Ausnehmung 66 erstreckt sich im Kupplungsspulengehäuse 52 radial nach außen, wobei die Schwungscheibe 29 sich mit ihrem Umfangsabschnitt 54 um etwa 0,5 bis 1 mm axial in diese Ausnehmung 66 hinein erstreckt.

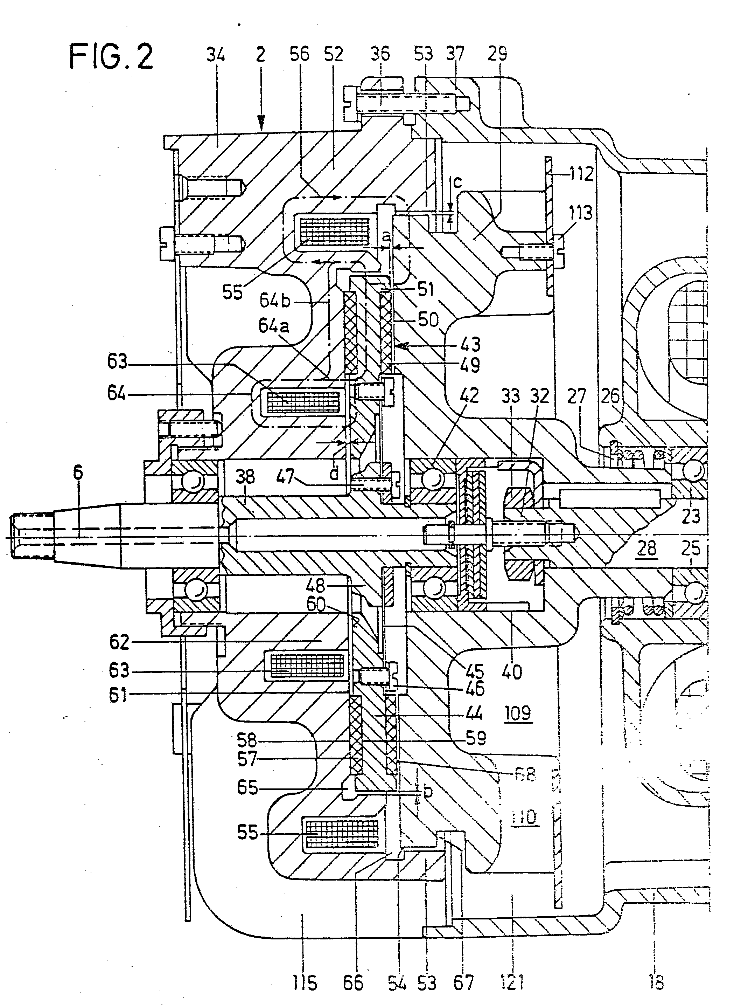

Die andere Ausnehmung 67 ist in der Schwungscheibe 29 ausgebildet und begrenzt den zylindrischen Umfangsabschnitt 54 auf der der Kupplungs-Brems-Scheibe 43 abgewandten Seite. Der Gehäusesteg 53 ragt axial in diese Ausnehmung 67 hinein. Durch den geringfügigen Versatz des Umfangsabschnitts 54 zur Kupplungs-Brems-Scheibe hin ist sichergestellt, daß bei einer Erregung der Kupplungsspule 55 auf keinen Fall in Richtung auf die Kupplungs-Brems-Scheibe 43 hinwirkende Kräfte auf die Schwungscheibe 29 ausgeübt werden. Vielmehr werden ganz geringe entgegengesetzt wirkende Kräfte auf die Schwungscheibe 29 ausgewirkt. Es ist daher sichergestellt, daß die Schwungscheibe 29 bei einer Erregung der Kupplungsspule 55 keinesfalls der Kupplungs-Brems-Scheibe 43 entgegenwandern kann. Die Kupplungsspule 55 und die Bremsspule 63 sind so geschaltet, daß der Kupplungs-Magnetpfad 56 und der Brems-Teilmagnetpfad 64b in dem Bereich des Kupplungsspulengehäuses 52, in dem beide verlaufen, einander entgegengesetzt gerichtet sind. Dies führt dazu, daß der magnetische Fluß schneller abgebaut und die Kupplungs-Brems-Scheibe schneller aus ihrer Anlage an der Schwungscheibe 29 zur Anlage am Bremswiderlager 34 und umgekehrt bewegt wird. Wie aus Fig. 2 hervorgeht, ist der Luftspalt 68 zwischen dem Kupplungsbelag 49 und der Kupplungsfläche 50 etwa 0,1 bis 0,2 mm breit, d. h. beim Schalten von Bremsen auf Kuppeln bzw. umgekehrt hat der Ankerring 44 mit dem Bremsbelag 57 und dem Kupplungsbelag 49 nur jeweils einen sehr kurzen Weg zurückzulegen. In Fig. 3 ist in vergrößertem Maßstab der Luftspalt 68' zwischen dem Bremsbelag 57 und der Bremsfläche 58 dargestellt, der beim Kuppeln auftritt.

Der Innenring 69 des im Bremslagerschild abgestützten Wälzlagers 41 stützt sich auf seiner der Schwungscheibe 29 zugewandten Seite gegen einen Anschlagbund 70 der Abtriebswelle 38 ab. Der Außenring 71 dieses Wälzlagers 41 liegt mit seiner nach außen gerichteten Fläche gegen eine Einstellmutter 72 an, die auf ein die Lagerbohrung 39 umgebendes Außengewinde 73 am Bremslagerschild 34 aufgeschraubt ist. Die Einstellmutter 72 wird mittels einer Fixierschraube 74 in ihrer Lage relativ zum Bremslagerschild 34 gesichert. Durch die Einstellmutter 72 und die geschilderte Abstützung des Wälzlagers 41 wird die Lage der Abtriebswelle 38 bezogen auf Verschiebungen aus der Brems-Kupplungs-Einheit 2 hinaus festgelegt.

Der Innenring 75 des in der Schwungscheibe 29 abgestützten Wälzlagers 42 liegt auf ihrer der Kupplungs-Brems-Scheibe 43 zugewandten Seite gegen einen an der Abtriebswelle 38 festgelegten Anschlag 76, der durch einen Sicherungsring gebildet wird, an. Die dem Motor 1 zugewandte Seite des Innenrings 75 liegt frei.

Die der Kupplungs-Brems-Scheibe 43 zugewandte Seite des Außenrings 77 des Wälzlagers 42 liegt frei. Die dem Motor 1 zugewandte Seite des Außenrings 77 liegt gegen eine Haltehülse 78 an, die in der Lagerbohrung 40 angeordnet ist. Diese Haltehülse 78 weist einen Schlitz 79 auf, in den eine Lasche 80 eines mittels der Mutter 33 festgeklemmten Sicherungsblechs 81 hineinragt, so daß diese Haltehülse 78 gegenüber der Schwungscheibe 29 unverdrehbar ist. Die Abtriebswelle 38 weist eine durchgehende Bohrung 82 auf, durch die eine Einstellschraube 83, die in eine Gewindebohrung 84 im Wellenzapfen 28 geschraubt ist, mittels eines Schraubendrehers od. dgl. verdreht werden kann. Durch eine derartige Verdrehung der Einstellschraube 83 wird deren axiale Lage bzw. insbesondere die axiale Lage eines an ihr angebrachten radial vorspringenden Anschlagbundes 85 relativ zur Motorwelle 8 und damit zur Schwungscheibe 29 verstellt. Gegen diesen Anschlagbund 85 stützt sich eine von mehreren Bimetallscheiben 86 ab, die auf der Einstellschraube 83 angeordnet sind. Die entgegengesetzte, also der Kupplungs-Brems-Scheibe 43 nächstliegende Bimetallscheibe 86 stützt sich mit ihrem Außenrand gegen einen Ringrand 87 der Haltehülse 78 ab. Durch Hineinschrauben oder Herausschrauben der Einstellschraube 83 in bzw. aus dem Wellenzapfen 28 wird die axiale Lage der Schwungscheibe 29 relativ zur Abtriebswelle 38 verändert. Da die Motorwelle 8 samt Schwungscheibe 29 von der Druck-Feder 16 ständig in Richtung zur Kupplungs-Brems-Scheibe 43 hin gedrückt wird, kann also mit der Einstellmutter 72 die Ruhe-Anpreßkraft der Kupplungs-Brems-Scheibe 43 mit ihrem Bremsbelag 57 gegen die Bremsfläche 58 des Bremslagerschildes 34 eingestellt werden, während durch Verstellen der Einstellschraube 83 der Luftspalt 68 zwischen Kupplungsbelag 49 und der Kupplungsfläche 50 eingestellt wird. Die Kupplungs-Brems-Scheibe 43 liegt nämlich dann, wenn weder die Kupplungsspule 55 noch die Bremsspule 63 erregt sind, mit einer auf die geschilderte Weise einstellbaren Vorspannung gegen die Bremsfläche 58 des Bremslagerschildes 34 an. Wenn der Kupplungsbelag 49 und auch der Bremsbelag 57 aufgrund der thermischen Belastung bei hohen Schaltspielen quellen, dann führt dies auch zu einer entsprechenden Erwärmung der Schwungscheibe 29. Diese Wärme wird zu den Bimetallscheiben 86 geleitet und führt dazu, daß diese sich verbiegen, wobei diese Verbiegung entsprechend ihrer Anordnung jeweils gegeneinandergerichtet ist. Dies führt dazu, daß die Einstellschraube 83 samt der Motorwelle 8 und der Schwungscheibe 29 in Richtung zum Motor 1 gegen die Kraft der Feder 16 verschoben wird. Die durch das erwähnte thermisch bedingte Quellen von Kupplungsbelag 49 und Bremsbelag 57 bedingte Verringerung des Luftspaltes 68 wird also kompensiert. Eine solche Kompensation ist notwendig, da der Luftspalt 68 in der Regel nur etwa 0,1 mm betragen soll, um beim Schalten der Kupplungs-Brems-Scheibe 43 Schlaggeräusche zu verhindern. Ein so kleiner Luftspalt 68 muß aber genau eingehalten werden, darf sich also während des Betriebes nicht noch weiter verringern.

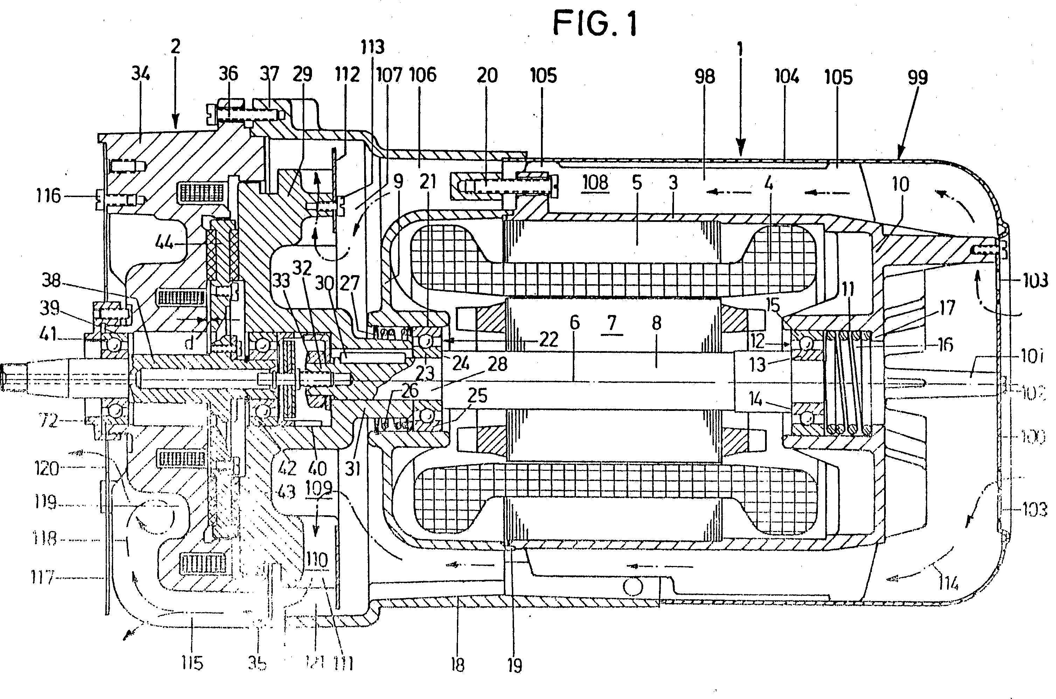

Wie insbesondere aus Fig. 1 hervorgeht, sind auf dem Statorgehäuse 3 über dessen Umfang verteilt radial abstehende, parallel zur Achse 6 verlaufende Kühlrippen 98 angebracht. Über das gesamte Statorgehäuse 3 ist eine die Kühlrippen 98 einschließende topfförmige Abdeckhaube 99 geschoben, die mit ihrem Boden 100 gegen Abstandshalter 101 anliegt, die einstückig mit dem Lagerschild 10 ausgebildet sind. An diesen Abstandshaltern 101 ist die Abdeckhaube 99 mittels Schrauben 102 befestigt. Der Boden 100 der Abdeckhaube 99 weist Öffnungen 103 auf, durch die Kühlluft eintreten kann. Der im wesentlichen zylindrische Mantel 104 der Abdeckhaube 99 liegt auf Vorsprüngen 105 der Kühlrippen 98 auf, so daß diese nur annähernd punktweise Berührungen zur Abdeckhaube 99 haben. Eine direkte Wärmeleitung vom Statorgehäuse 3 über die Kühlrippen 98 zur Abdeckhaube 99 findet also nur in sehr geringem Umfang statt ; die Abdeckhaube 99 erwärmt sich also nur geringfügig.

Den Kühlrippen 98 entsprechende Kühlrippen 106 sind auch in dem Gehäuse 18 ausgebildet. Sie erstrecken sich teilweise radial durchgehend zwischen dem Lagerschild 9 und dem Gehäuse 18, da sie gleichzeitig den Lagerschild 9 abstützen. Zwischen dem Lagerschild 9 und der Schwungscheibe 29 ist ein Freiraum 107, in den die zwischen den Rippen 98 und dem Statorgehäuse 3 bzw. dem Mantel 104 der Abdeckhaube 99 bzw. den Kühlrippen 106 dem Lagerschild 9 und dem Gehäuse 18 gebildeten Kühlkanäle 108 einmünden.

In der Schwungscheibe 29 ist auf ihrer dem Motor 1 zugewandten Seite ein Ansaugraum 109 in Form eines zum Freiraum 107 hin offenen Ringraumes ausgebildet, der die Nabe 31 der Schwungscheibe 29 umgibt. Aus diesem Ansaugraum 109 münden Radialkanäle 110 nach außen. Diese werden durch sich radial und axial erstreckende Rippen 111, die einstückig mit der Schwungscheibe 29 ausgebildet sind begrenzt. Auf ihrer der Schwungscheibe 29 abgewandten Seite ist an diesen Rippen 111 ein ringscheibenförmiger Luftleitring 112 mittels Schrauben 113 befestigt, der die Radialkanäle 110 zum Motor 1 hin begrenzt. Der auf die geschilderte Weise aufgebaute Lüfter ist ein Axial-Radial-Gebläse.

Die durch die Öffnungen 103 angesaugte Kühlluft strömt entsprechend den Strömungsrichtungspfeilen 114 durch die Kühlkanäle 108, den Freiraum 107, den Ansaugraum 109 und die Radialkanäle 110. Da — wie aus Fig. 1 ersichtlich ist — der Ansaugraum 109 bis nahe an die Kupplungsfläche 50 heranreicht, ist eine besonders gute Kühlung im kritischen Bereich der Kupplungsfläche 50 gewährleistet.

Aus den Radialkanälen 110 strömt die Luft zwischen Kühlrippen 115, die am Außenumfang und an der Stirnseite des Bremslagerschildes 34 ausgebildet sind. An der äußeren Stirnseite des Bremslagerschildes 34 ist mittels Schrauben 116 ein ringförmiges Abdeckblech 117 angebracht, so daß entsprechend dem Strömungspfeil 118 ein Teil der zwischen den Kühlrippen 115 entlangströmenden Luft radial nach innen abgelenkt wird und die Stirnseite des Bremslagerschildes 34 kühlt. Benachbart zur Bremsfläche 58 des Bremslagerschildes 34 und radial zwischen der Kupplungsspule 55 und der Bremsspule 63 weist der Bremslagerschild 34 eine jeweils bis in die Nähe der Kupplungsspule 55, der Bremsspule 63 und der Bremsfläche 58 reichende, als Verwirbelungskammer dienende ringförmige Ausnehmung 119, in der die Luft gemäß dem Strömungspfeil 118 verwirbelt wird. Sie tritt dann durch eine radial innenliegende Austrittsöffnung 120 im Abdeckblech 117 in der Nähe der Einstellmutter 72 aus.

Die Umlenkung der aus den Radialkanälen 110 in radialer Richtung austretenden Kühlluft in eine Strömung parallel zur Achse 6 zwischen den Kühlrippen 115 erfolgt in einem Umlenkabschnitt 121, der außen durch das Gehäuse 18 begrenzt wird.

**Patentansprüche**

1. Elektromotorischer Regel- und Steuerantrieb, insbesondere für Industrie-Nähmaschinen, umfassend einen ständig antreibbaren Motor (1) mit einer Schwungscheibe (29) und eine mit diesem verbundene Brems-Kupplungs-Einheit (2), die eine drehfest mit einer Abtriebswelle (38) verbundene, wahlweise mit einem eine Bremsfläche (57) aufweisenden, undrehbaren Bremslagerschild (34) bzw. mit der eine Kupplungsfläche aufweisenden Schwungscheibe (29) in Reibungseingriff bringbare, mit einem Ankerring (44) versehene Kupplungs-Brems-Scheibe (43) aufweist, wobei im Bremslagerschild (34) ein Kupplungsspulengehäuse (52) mit einer Kupplungsspule (55) und ein Bremsspulengehäuse (62) mit einer Bremsspule (63) angeordnet sind, denen der Ankerring (44) zugeordnet ist, wobei das Bremsspulengehäuse (62) auf der dem Motor (1) abgewandten Seite mit einem Axialspalt (d) vor dem Ankerring (44) angeordnet ist und das Kupplungsspulengehäuse (52) einen radial außenliegenden Ringsteg (51) des Ankerrings (44) unter Bildung eines Radialspaltes (b) umgreift, welcher Ringsteg (51) einen Axialspalt (a) zur Schwungscheibe (29) bildet und wobei zwischen einem Umfangsabschnitt der Schwungscheibe (29) und einem diesen Umfangsabschnitt umgreifenden Gehäusesteg (53) des Kupplungsspulengehäuses (52) ein Radialspalt (c) gebildet ist, dadurch gekennzeichnet, daß das Bremsspulengehäuse (62) in bezug auf den Bremsbelag (57) radial nach Innen versetzt ist und daß auf der dem Bremslagerschild (34) zugewandten Seite des Ringsteges (51) in dem Kupplungsspulengehäuse (52) eine den Radialspalt axial (b) begrenzende Hinterschneidung (65) ausgebildet ist, und daß im Bereich des Gehäusesteges (53) und des Umfangsabschnitts (54) in der Schwungscheibe (29) und/oder dem Gehäusesteg (53) den Radialspalt (c) axial begrenzende, sich radial erstreckende Ausnehmungen (66, 67) vorgesehen sind.

2. Antrieb nach Patentanspruch 1, dadurch gekennzeichnet, daß der Ringsteg (51) sich axial in die Hinterschneidung (65) hinein erstreckt.

3. Antrieb nach Patentanspruch 1, dadurch gekennzeichnet, daß die Ausnehmung (66) in dem Gehäusesteg (53) sich axial über den Umfangsabschnitt (54) in Richtung zum Motor (1) hin erstreckt.

4. Antrieb nach Patentanspruch 1, dadurch gekennzeichnet, daß die Ausnehmung (67) in der Schwungscheibe (29) den Gehäusesteg (53) axial in Richtung zum Bremslagerschild (34) hin untergreift.

**Claims**

1. An electromotive variable-speed and control drive particularly for use in industrial sewing machines comprising a motor (1) capable of continuous drive and having a flywheel (29), and a clutch-brake unit (2) connected to the motor, the clutch-brake unit (2) having a clutch-brake disk (43) which is connected to a drive shaft (38) non-rotatably with respect thereto and which is capable of being brought into friction engagement optionally with a brake surface (57) of a non-rotatable brake bearing bracket (34), or optionally with the flywheel (29) having a clutch surface, the brake bearing bracket (34) including a clutch coil casing (52) with a clutch coil (55) and a brake coil casing (62) with a brake coil (63) to which the armature ring (44) is related, the brake coil casing (62) being arranged on the side turned away from the motor (1) and with an axial gap (d) in front of the armature ring (44), and the clutch coil casing (52) encompassing a radially outer-lying ring portion (51) of said armature ring (44), thus forming a radial gap (b), which ring portion (51) forms an axial gap (a) to the flywheel (29), with a radial gap (c) being formed between a peripheral section of the flywheel (29) and a casing piece (53) of the clutch coil casing (52) encompassing this peripheral section characterized in that the brake coil casing (62) is staggered radially inwards with respect to the brake friction layer (57), and that an undercut (65), axially confining the radial gap (b), is formed on a side of the ring portion (51) in said clutch coil casing (52) facing the brake bearing bracket (34), and that radially-extending recesses (66, 67), axially confining the radial gap (c), are provided in the region of the casing piece (53) and at least one of the peripheral section (54) of the flywheel (29) and the casing piece (53).

2. A drive according to claim 1, characterized in that said ring portion (51) axially extends into the undercut (65).

3. A drive according to claim 1, characterized in that the recess (66) in the casing piece (53) axially extends over the peripheral section (54) in the direction of the motor (1).

4. A drive according to claim 1, characterized in that the recess (67) in the flywheel (29) axially extends beneath the casing piece (53) in the direction of the brake bearing bracket (34).

**Revendications**

1. Dispositif de réglage et de commande à moteur électrique, notamment pour des machines à coudre industrielles, comprenant un moteur (1) pouvant être entraîné de façon continue et comprenant un disque volant (29) et une unité d'accouplement et de freinage (2) reliée à ce dernier, qui comporte un flasque de freinage (34) rendu solidaire en rotation d'un arbre mené (38) et pouvant être amené au choix en contact par frottement avec un flasque de freinage (34), non rotatif et présentant une surface de freinage (57), ou avec un disque volant (29) qui présente une surface d'accouplement, une unité d'accouplement et de freinage (43) munie d'un anneau d'induit (44), tandis qu'un logement de bobine d'accouplement (52) contenant une bobine d'accouplement (55) et un logement de bobine de freinage (62) contenant une bobine de freinage (63) sont disposés dans le flasque de freinage (34), auxquels est associé l'anneau d'induit (44), le logement de la bobine de freinage (62) étant disposé face à l'anneau d'induit (44) sur son côté qui est à l'opposé du moteur (1) en en étant séparé par un interstice axial (d) et le logement de bobine d'accouplement (52) entourant une collerette annulaire (51) de l'anneau d'induit (44) située radialement à l'extérieur en formant un interstice radial (b), laquelle collerette annulaire (51) forme un interstice radial (a) avec le disque volant (29), et un interstice radial (c) étant formé entre une section périphérique du disque volant (29) et une collerette (53) du logement de bobine d'accouplement (52) entourant cette section périphérique, caractérisé en ce que le logement de bobine de freinage (62) est déporté radialement vers l'intérieur par rapport à la garniture de frein (57) et en ce qu'une contre-dépouille (65) limitant axialement l'interstice radial (b) est constituée dans le logement de bobine d'accouplement (52) sur le côté de la collerette annulaire (51) qui est tourné vers le flasque de freinage (34), et en ce que dans la région de la collerette (53) du boîtier et la section périphérique (54) sont prévus dans le disque volant (29) et/ou la collerette (53) des évidements (66, 67) s'étendant radialement, limitant axialement l'interstice radial (c).

2. Mécanisme selon la revendication 1, caractérisé en ce que la collerette annulaire (51) s'étend axialement vers l'intérieur dans la contre-dépouille (65).

3. Mécanisme selon la revendication 1, caractérisé en ce que l'évidement (66) de la collerette (53) du boîtier s'étend axialement vers l'intérieur sur la section périphérique (54) en direction du moteur (1).

4. Mécanisme selon la revendication 1, caractérisé en ce que l'évidement (67) du disque volant (29) est situé axialement en direction du flasque de freinage (34) au-dessous de la collerette (53).

FIG.1

# FIG.2

**FIG. 3**

**FIG. 4**